# EUROPEAN PATENT APPLICATION

(11) **EP 2 605 149 A1**
(43) Date of publication of application: **19.06.2013**
(21) Application number: 12196945.5
(22) Date of filing: 13.12.2012
(51) Int. Cl.: G06F 17/18, G06Q 10/04, G06Q 10/06, G06F 17/30

(54) **N-dimensional locking**

(30) Priority: 16.12.2011 US 201113328173
(71) Applicant: SAP AG, 69190 Walldorf (DE)
(72) Inventor: Lerenc, Vedran, 69190 Walldorf (DE)
(74) Representative: Richardt Patentanwälte GbR

(57) **Abstract**

An apparatus, method and computer-readable storage medium for determining intent object preferences for locking intent objects, and grouping the intent objects into sets based on the intent object preferences for locking. The sets may contain intent objects with matching preference values for the intent object preferences for locking. Each set may be locked such that only a matcher object associated with the set may operate on the set. The locking may be done in memory, or via a database. The matcher associated with a set may determine whether the intent objects in that set match other intent objects in the set. Multiple matchers may operate on their associated sets in parallel.

## Description

### Field of the invention

The invention relates to transportation systems, in particular for automated systems for matching riders and drivers.

### Background and related art

There are software applications which match individuals based on the preferences of the individuals. These applications may include carpooling applications, where individuals are grouped into a carpool based on various preferences. The preferences may include the route, time of transport, etc. Another example is an application to group individuals for a book club based on preferences such as book genre, and location of the book club. In order to perform operations for matching individuals based on preferences, an application may logically organize the information about individuals and their associated preferences into data structures, which may be called intent objects, and other data structures to match the intent objects based on preferences, and these data structures may be called matcher objects. Based on matching performed by the matcher objects, intent objects may be grouped into different groups.

When an application matches individuals, there are certain constraints which are imposed. For example, a carpooling application may not assign an individual to two different car pools at the same point in time. In other words, an application may not put the same intent into two different groups. In order to operate within such constraints, an application may process intent objects in a serial fashion, so that only one individual's preferences are analyzed at a time. However, serial processing may be problematic when the number of individuals and preferences to be processed are high, which may limit the scaling capabilities of the application. In addition, serial processing may not effectively utilize the features of computer hardware such as multiple processors and processors with multiple cores. Therefore, there is a need for processing intent objects in parallel to effectively analyze individuals' preferences.

### Summary

The invention provides for an electronic carpool matching system, a method of carpool matching, a computer program product, and a transportation system in the independent claims. Embodiments are given in the dependent claims.

As will be appreciated by one skilled in the art, aspects of the present invention may be embodied as a apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Small-talk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'database' as used herein encompasses a data file or repository which contains data that may be accessed by a processor. Examples of databases are, but are not limited to: a data file, a relational database, a file system folder containing data files, and a spreadsheet file.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, gear sticks, steering wheel, pedals, wired glove, dance pad, remote control, one or more switches, one or more buttons, and accelerometer are all examples of user interface components which enable the receiving of information or data from an operator.

A 'mobile computing device' as used herein encompasses a portable computer or computing device operable for connecting to a network for exchanging data with other computer systems. Examples of mobile computing devices include, but are not limited to: a personal digital assistant, a mobile telephone device, a smart phone, a computer, a lap top, a vehicle comprising a navigation system, and a navigation system.

A 'vehicle' as used herein encompasses any transportation device operable for traveling on a roadway. Examples of a 'vehicle' include, but are not limited to: a car, a truck, and a motorcycle.

In one aspect the invention provides for an electronic carpool matching system. The electronic carpool matching system comprises a rider database means containing ride intents. The rider database means may for instance be a database or a relational database. Each of the ride intents comprises geographic coordinates of a rider origin and a rider destination for each ride intent. For instance the ride intent may be a record or a file contained in the database.

In some embodiments the ride intent may also comprise or contain a time window in which a particular rider plans to take the ride for example this may be 8-10 o'clock in the morning. The duration of the ride is less than the time window. For example with the previous example the ride may only take 70 minutes. This would leave some flexibility in the system to find matching rides.

The electronic carpool matching system further comprises a memory means containing machine-executable instructions. The memory means may for instance be memory or computer memory. The electronic carpool matching system further comprises at least one processor means for executing the machine-executable instructions. The at least one processor means may for instance be one or more processors.

Execution of the instructions causes the processor to receive driver origin and driver destination. The driver origin and the driver destination are geographic coordinates of a driving itinerary chosen or entered by a particular driver. The geographic coordinates may for instance be street addresses or they may be on some other system of referencing a geographic location such as GPS coordinates. Execution of the instructions further cause the processor means to receive an acceptable driving delay parameter. The acceptable driving delay parameter is descriptive of an allowable delay in the driving itinerary. This for instance may be a maximum acceptable time the driver is willing to accept or in some cases it may be a percentage of the time needed to drive between the origin and the destination.

Execution of the instructions further cause the processor means to determine a determined route between the driver origin and the driver destination using a driving route optimization program. The driving route optimization program may for instance be mapping software used to choose a route to drive between the driver origin and the driver destination.

Execution of the instructions further cause the processor means to determine a set of alternate routes between the driver origin and the driver destination in accordance with the allowable delay and the determined route. For instance the mapping software used for choosing the determined route may also be used. Execution of the instructions further causes the processor mean to determine a geographic bounding box using the set of alternate routes. Essentially the geographic bounding box defines a region in which the driver may be able to pick up riders without exceeding the allowable delay. Execution of the instructions further cause the processor means to construct a database query at least partially using the geographic bounding box. The database query is operable to be selective of ride intents with both the rider origin and the rider destination within the geographic bounding box.

Execution of the instructions further cause the processor means to query the rider database with the database query. Execution of the instructions further cause the processor means to receive a set of rider intent objects from the rider database means. The set of rider intent objects comprises the set of ride intents with both the rider origin and the rider destination within the geographic bounding box. Execution of the instructions further cause the processor means to lock the set of rider intent objects in the database so that when the set of rider intent objects are locked then other requests to find riders would not be able to modify the set of rider intent objects. Execution of the instructions further cause the processor means to select one or more selected rider intent objects from the set of rider intent objects using a matching algorithm. The matching algorithm may use mapping or routing software to select one or more rider intent objects.

Execution of the instructions further cause the processor to release the set of rider intent objects in the database. This step may also include marking the one or more selected rider intent objects as having been selected so that the future use does not select a rider intent for more than one ride. This embodiment may be beneficial because it may provide a means of matching riders with drivers in an efficient manner. This may for instance reduce the use of gasoline and reduce carbon dioxide emissions by drivers. In some embodiments the selected rider intent objects could be forward to another system or displayed. Execution of the instructions may also cause the processor means to mark the one or more selected rider intent objects as selected or fulfilled in the rider database means.

In another embodiment the electronic carpool matching system further comprises a mobile computing device. The mobile computer device comprises a first processor means. The first processor means performs at least a portion of the machine-executable instructions. The electronic carpool matching system further comprises a server. The server comprises the rider database means. The server comprises a second processor means. The at least one processor means comprises the first processor means and the second processor means. The electronic carpool matching system further comprises a network connection between the mobile computing device and the server. The network connection enables the first processor means and the second processor means to exchange data and instructions.

In another embodiment execution of the instructions further causes the first processor means to perform at least the following: receive the driver origin and the driver destination, receive the acceptable driving delay parameter, determine the determined route between the driver origin and the driver destination using the driving route optimization program, determine the set of alternate routes between the driver origin and the driver destination in accordance with the allowable delay and the determined route, determine the geographic bounding box using the set of alternate routes and construct a database query using the geographic bounding box.

In another embodiment the mobile computing device is any one of the following: a personal digital system, a mobile telephone device, a smart phone, a computer, a laptop, and a navigation system.

In another embodiment execution of the instructions further cause the processor means to determine a list of incorrectly selected rider intent objects from the set of rider intent objects using a screen algorithm. Execution of the instructions further cause the processor means to remove the list of incorrectly selected rider intent objects from the set of rider intent objects before selecting the one or more selected rider intent objects from the set of rider intent objects using the matching algorithm. Execution of the instructions further cause the processor means to release the list of incorrectly selected rider intent objects from the database before selecting the one or more selected rider intent objects from the set of rider intent objects using the matching algorithm. This embodiment may be beneficial because rider intent objects which are not correctly selected are released. This enables the incorrectly selected rider intent object to be selected by a different driver. This may also reduce the size of the selection space which needs to be selected or optimized by the matching algorithm.

In another embodiment the matching algorithm is operable for selecting inaccessible rider origins and/or rider destinations in the set of rider intent objects. This may be for instance that the bounding box which is created using the alternate routes may encompass locations which are not accessible to the driver. For instance there may be dead ends or streets which are inaccessible. Entrance to the route might be outside the bounding box. In some cases points within the bounding box may not be accessible to the driver if only the allowable delay is considered. For example points within the bounding box may require too much travel time. This may be because travel time on an expressway or autobahn is typically quite faster than on city streets.

In another embodiment the carpool matching system is operable to receive a second database query after locking the set of rider intent objects in the database. This may be beneficial because the electronic carpool matching system may be able to operate in a parallel mode. Multiple drivers may enter their driver origin/driver destinations and obtain a list of potential riders.

In another embodiment each of the ride intents further comprises a set of preferences. The matching algorithm is operable to optimize the preferences during selecting one or more selected rider intent objects from the set of rider intent objects using the matching algorithm. For instance the ride intents may specify the rider's preference as to things like smoking, age, gender, or other parameters which would affect whether a driver and a rider would want to ride with each other.

In another embodiment execution of the instructions further cause the processor to construct the database query at least partially using at least one of the set of preferences. This may be beneficial because it may reduce the number of rider intent objects which the matching algorithm needs to search through or optimize.

In another embodiment the set of preferences comprises any one of the following: smoking preference, music preference, gender, time window of ride, driving style, conversation style, occupation, vehicle type, temperature inside, and combinations thereof.

In another embodiment the driving itinerary further comprises way points. The set of alternate routes pass within a specified distance of the way points. This is beneficial because the driver may be able to specify a preferred route which here she would like to follow.

In another aspect the invention provides for a method of carpool matching comprising the step of receiving driver origin and driver destination. The driver origin and the driver destination have geographic coordinates of a driving itinerary. The method further comprises the step of receiving an acceptable driving delay parameter. The acceptable driving delay parameter is descriptive of an allowable delay in the driving itinerary. The method further comprises the step of determining a determined route between the driver origin and the driver destination using a driving route optimization program.

The method further comprises determining a set of alternate routes between the driver origin and the driver destination in accordance with the allowable delay and the determined route. The method further comprises the step of determining a geographic bounding box using the set of alternate routes. The method further comprises the step of constructing a database query at least partially using the geographic bounding box. The database query is operable to be selective of ride intents with both the rider origin and the rider destination with the geographic bounding box. The method further comprises the step of querying a rider database with the database query. The rider database means contains ride intents. Each of the ride intents comprises geographic coordinates of a rider origin and a rider destination for each ride intent.

The rider database means may be an electronically implemented database means such as a computer database or a relational database. The method further comprises the step of receiving a set of rider intent objects. The set of rider intent objects comprises the set of ride intents with both the rider origin and the rider destination within the geographic bounding box. The method further comprises the step of locking the set of rider intent objects in the database. The method further comprises the step of selecting one or more selected rider intent objects from the set of rider intent objects using a matching algorithm. The method further comprises the step of releasing the set of rider intent objects in the database.

In another aspect the invention provides for a computer program product comprising machine-executable instructions for execution by a processor of an electronic carpool matching system. The electronic carpool matching system comprises the rider database means containing the ride intents. Each of the ride intents comprises geographic coordinates of a rider origin and a rider destination for each ride intent.

Execution of the instructions causes the processor to receive driver origin and the driver destination. The driver origin and the driver destination are geographic coordinates of a driving itinerary. Execution of the instructions further causes the processor to receive an acceptable driving delay parameter. The acceptable driving delay parameter is descriptive of an allowable delay in the driving itinerary. Execution of the instructions further cause the processor to determine a determined route between the driver origin and the driver destination using a driving route optimization program.

Execution of the instructions further causes the processor to determine a set of alternate routes between the driver origin and the driver destination in accordance with the allowable delay and the determined route. Execution of the instructions further causes the processor to determine a geographic bounding box using the set of alternate routes. Execution of the instructions further cause the processor to construct a database query at least partially using the geographic bounding box. The database query is operable for to be selective of ride intents with both the rider origin and the rider destination within the geographic bounding box.

Execution of the instructions further cause the processor to query the rider database with the database query. Execution of the instructions further cause the processor to receive a set of rider intent objects. The set of rider intent objects comprises the set of ride intents with both the rider origin and the rider destination within the geographic bounding box. Execution of the instructions further cause the processor to lock the set of rider intent objects in the database. Execution of the instructions further causes the processor to select one or more selected rider intent objects using a matching algorithm. Execution of the instructions further cause the processor to release the set of rider intent objects in the database.

Locking a database prevents the rider intent object from being used by another matching algorithm for selecting deselected rider intent objects. It is a means of preventing a particular rider being assigned to more than one ride. Releasing the set of rider intent objects encompasses changing the database system such that the set of rider intent objects is no longer locked.

In another aspect the invention provides for a transportation system comprising an electronic carpool matching system according to an embodiment. This embodiment may be beneficial because by using an electronic carpool matching system according to an embodiment, riders may be more efficiently matched with drivers. This may cause a reduction in the amount of fuel used and also as a result cause a reduction in carbon dioxide emissions. The transportation system may in one embodiment comprise one or more cars and a roadway system. The electronic carpool matching system may then enable riders and drivers to efficiently use the roadway system.

In another aspect the invention provides for a method comprising: determining at least one intent object preference for locking a plurality of intent objects; grouping the plurality of intent objects into a plurality of sets, based on values of the at least one intent object preference associated with each intent object from the plurality of intent objects, wherein each set from the plurality of sets contains intent objects with matching preference values for the at least one intent object preference; associating a matcher object with the each set; locking each set, wherein only the matcher object associated with the each set can operate on the each set; and determining, by the associated matcher of the each set, whether an intent object in the each set matches other intent objects in the each set.

In another embodiment at least two matcher objects operate in parallel.

In another embodiment the associated matcher object with the each set is a ride matcher object, and the each intent object is a ride intent object.

In another embodiment locking each set is implemented in memory.

In another embodiment locking each set is implemented in a database.

In another embodiment preferences of the each ride intent object include at least one of smoking, music, sex, gender, origin of ride, destination of ride, time window of ride, driving style, conversation style, area of occupation, vehicle type, and temperature inside vehicle.

In another aspect the invention provides for a non-transitory computer-readable medium embodied with computer-executable instructions for causing a computer to execute instructions, the computer instructions comprising: determining at least one intent object preference for locking a plurality of intent objects; grouping the plurality of intent objects into a plurality of sets, based on values of the at least one intent object preference associated with each intent object from the plurality of intent objects, wherein each set from the plurality of sets contains intent objects with matching preference values for the at least one intent object preference; associating a matcher object with the each set; locking each set, wherein only the matcher object associated with the each set can operate on the each set; and determining, by the associated matcher of the each set, whether an intent object in the each set matches other intent objects in the each set.

In another embodiment at least two matcher objects operate in parallel.

In another embodiment the associated matcher object with the each set is a ride matcher object, and the each intent object is a ride intent object.

In another embodiment locking each set is implemented in memory.

In another embodiment locking each set is implemented in a database.

In another embodiment preferences of the each ride intent object include at least one of smoking, music, sex, gender, origin of ride, destination of ride, time window of ride, driving style, conversation style, area of occupation, vehicle type, and temperature inside vehicle.

In another aspect the invention provides for an apparatus comprising: a processor for executing computer instructions, the computer instructions comprising: determining at least one intent object preference for locking a plurality of intent objects; grouping the plurality of intent objects into a plurality of sets, based on values of the at least one intent object preference associated with each intent object from the plurality of intent objects, wherein each set from the plurality of sets contains intent objects with matching preference values for the at least one intent object preference; associating a matcher object with the each set; locking each set, wherein only the matcher object associated with the each set can operate on the each set; and determining, by the associated matcher of the each set, whether an intent object in the each set matches other intent objects in the each set.

In another embodiment at least two matcher objects operate in parallel.

In another embodiment the associated matcher object with the each set is a ride matcher object, and the each intent object is a ride intent object.

In another embodiment locking each set is implemented in memory.

In another embodiment locking each set is implemented in a database.

In another embodiment preferences of the each ride intent object include at least one of smoking, music, sex, gender, origin of ride, destination of ride, time window of ride, driving style, conversation style, area of occupation, vehicle type, and temperature inside vehicle.

It is understood that one or more of the claims and/or embodiments may be combined as long as the combined elements are not mutually exclusive.

### Brief description of the drawings

In the following embodiments of the invention are explained in greater detail, by way of example only, making reference to the drawings in which:
Fig. 1 shows an interaction between a matcher and intents in an exemplary embodiment;
Fig. 2 illustrates an exemplary embodiment where multiple ride intents are grouped based on matching performed by a matcher;
Fig. 3 illustrates an exemplary embodiment where multiple matchers operate on intents simultaneously;
Fig. 4 illustrates locking on multiple preferences or dimensions in an embodiment;
Fig. 5 shows an exemplary architecture in an embodiment of the invention;
Fig. 6 shows a flowchart which illustrates a method according to an embodiment
Fig. 7 illustrates an example of an electronic carpool matching system;
Fig. 8 shows an example of a map showing major highways;
Fig. 9 shows a chart which illustrates longitude and latitude with a first ride intent and a second ride intent; and
Fig. 10 shows latitude and longitude again with the addition of a time coordinate and a third ride intent.

### Detailed Description

Like numbered elements in these figures are either equivalent elements or perform the same function. Elements which have been discussed previously will not necessarily be discussed in later figures if the function is equivalent.

Embodiments may be discussed in systems and processes to efficiently analyze intent objects in a parallel. In particular, embodiments of the present invention pertain to a feature for determining intent object preferences for locking intent objects, and grouping the intent objects into sets based on the intent object preferences for locking. The sets may contain intent objects with matching preference values for the intent object preferences for locking. Each set may be locked such that only a matcher object associated with the set may operate on the set. The locking may be done in memory, or via a database. The matcher associated with a set may determine whether the intent objects in that set match other intent objects in the set. Multiple matchers may operate on their associated sets in parallel. In an embodiment, the above discussed features may be implemented in a carpooling context, where the matchers are ride matchers, and the intents are ride intents. In an embodiment, the intent object preferences for locking may include smoking, music, sex, gender, origin of ride, destination of ride, time window of ride, driving style, conversation style, area of occupation, vehicle type, and temperature inside vehicle.

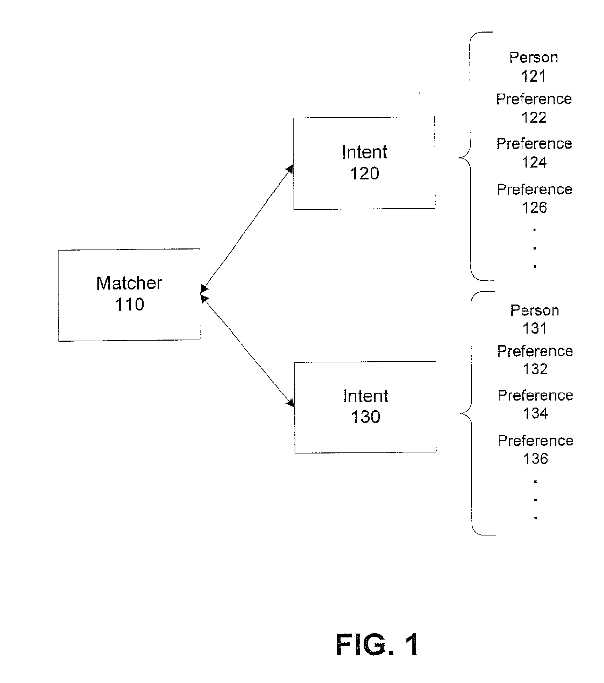

FIG. 1 shows an interaction between a matcher 110 and intents, 120 and 130, in an exemplary embodiment. Intent 120 defines the preferences of a person 121. The preferences of person 121 may be any set of preferences including preference 122, 124, and 126. Intent 130 defines the preferences of another person 131. The preferences of person 131 may be any set of preferences including preference 132, 134, and 130. Intents 120 and 130 may define preferences and associate them with a person in any context. For example, in an embodiment, an intent may define the preferences of a person pertaining to social or sports events such as tennis practice. The preferences may include a) the time at which the associated person likes to practice tennis, b) the location at which the associated person likes to practice tennis, c) whether the person likes to play singles or doubles matches, d) the skill level of the opponent or opponents, and so on. In another exemplary embodiment, an intent may define the preferences of a person looking to join a book club. The preferences may include a) the time at which the associated person would like to discuss books with others, b) the location at which the associated person would like to have discussion pertaining to a book, c) the types of books the associated person is interested in, d) the number of books the associated person usually reads in a given period of time, and so on.

In another exemplary embodiment, an intent (or ride intent) may define the preferences of a person interested in car pooling. The preferences may include a) the time at which the person associated with the ride intent needs to arrive at the destination, b) the earliest time at which the associated person is willing to depart from the destination, c) whether the associated person prefers to smoke in the vehicle, d) the type of music the associated person likes to listen to, e) origin of the ride, f) destination of the ride, g) sex/gender of the other passengers in the car, h) driving style of the vehicle (ex: aggressive or conservative), i) conversation topics among passengers in the vehicle, j) occupation areas of the passengers in the vehicle, k) vehicle type or model, I) temperature range inside the vehicle, and so on. It will be evident to a person having ordinary skill in the art that an intent may define any event or activity where a person may have preferences. The above examples are illustrative, and are not intended to limit the scope of the invention.

A matcher 110 may determine if a match exists between intents 120 and 130 based on the preferences defined by the intents. A matcher may match any type of intents which define preferences for any activity or event. In an embodiment, the matcher 110 (or ride matcher) may match intents (or ride intents) 120 and 130, which define the preferences of a person interested in car pooling. In an embodiment, intent 120 may include preferences 122, 124, and 126 of person 121. Preference 122 may be a preference to travel between a time window of 9 AM and 10 AM. Intent 130 may include preferences 132, 134, and 136 of person 131. Preference 132 may be a preference to travel between a time window of 8 AM and 10 AM. Preference 122 matches preference 132 since both person 121 and 131 are willing to travel during the same time window. Similarly, preference 124 may match preference 134, and preference 126 may match preference 136. If all the preferences of intent 120 match all the preferences of intent 130, matcher 110 may determine that intent 120 matches intent 130.

The method utilized by matcher 110 to determine whether there is a match between two intents may vary based on the context. In an embodiment, if one preference from intent 120 does not match a corresponding preference from intent 130, the matcher 110 may determine that intent 120 and intent 130 do not match. In another embodiment, if a subset of preferences from intent 120 match a corresponding subset of preferences from intent 130, the matcher may determine that intent 120 matches intent 130. In an embodiment, matching preferences of intents may be assigned different weights, and if the sum of the weights of matching preferences between two intents exceeds a weight threshold, the matcher may determine that the intents match.

In an embodiment, the granularity of matching may be defined on a preference level. For example, in an embodiment, the matcher 110 may match intents (or ride intents) 120 and 130, which define the preferences of a person interested in car pooling. Preference 122 may be a preference to listen to trance music in the vehicle. Corresponding preference 132 may be a preference to listen to house music. The matcher 110 may determine that house music and trance music, although not equivalent, are similar enough, and therefore preference 122 and 132 match. However, matcher 110 may not match a trance music preference and a western music preference due to the considerable difference between the two. Preference 124 may be a preference to smoke in the vehicle. Corresponding preference 134 may be a preference to travel in a non-smoking vehicle. Since preferences 124 and 134 cannot exist together in one vehicle, the matcher may determine that preference 124 does not match preference 134. Thus, the matcher 110 may apply a strict standard when comparing a set of corresponding preferences (smoking preference), and apply a flexible standard when comparing another set of corresponding preferences (music preference).

In another embodiment illustrating flexible matching, preference 122 may be a preference to depart from origin A. Corresponding preference 132 may be a preference to depart from origin B. The matcher 110 may determine that origin A and origin B, although not the exact same location, are within a particular distance from each other, and therefore preference 122 and 132 match. I.e., origin A is within a geographic detour area from origin B. The geographic detour area may be predefined, and may be set to any value.
[15] In another embodiment, matcher 110 may determine that although origin A and B are not the exact same location, origin B is en route to a destination from origin A. In other words, when travelling from origin A to the destination, origin B is on the way. Thus, matcher 110 may match origin A (preference 122) and origin B (preference 132).

In a further embodiment, matcher 110 may determine that origin A and B are not the exact same location, and that origin B is not en route to a destination from origin A. However, matcher 110 may determine that origin B is within a geographic detour area from a point in the route between origin A and a destination, i.e., when travelling from origin A to the destination, one only needs to make a slight detour to access origin B. Thus, matcher 110 may match origin A (preference 122) and origin B (preference 132). In another embodiment if origin B is not within the geographic detour area, matcher 110 may determine that origin A and origin B do not match.

The above examples are illustrative of varying the granularity of matching, and are not intended to limit the scope of the invention. In an embodiment, a flexible or strict comparison standard may be applied to any set of corresponding preferences.

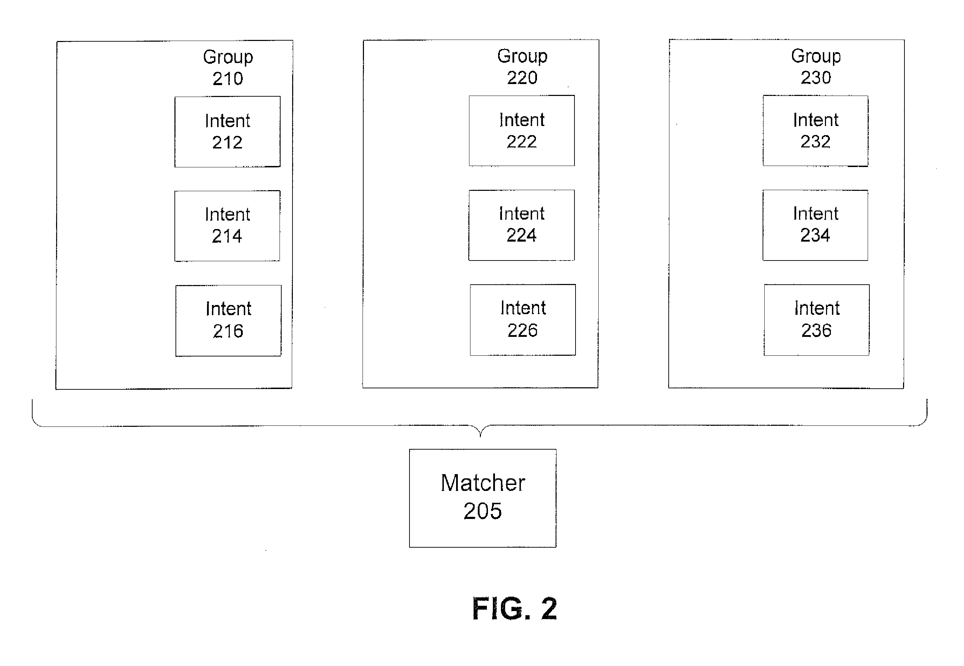

FIG. 2 illustrates an exemplary embodiment where multiple ride intents are grouped based on matching performed by a matcher. In an embodiment, matcher 205 may determine that a) intents 212, 214, and 216 match, b) intents 222, 224, and 226 match, and c) intents 232, 234, and 236 match. Therefore, intents 212, 214, and 216 may be grouped into group 210, intents 222, 224, and 226 may be grouped into group 220, and intents 232, 234, and 236 may be grouped into group 230. Matcher 205 may match any type of intents which define preferences for any activity or event. In an exemplary embodiment, an intent (or ride intent) may define the preferences of a person interested in car pooling. Matcher 205 may be utilized for matching intents into groups for scheduling car pools between various individuals. In an embodiment, group 210 may include ride intents defining individuals with a matching set of preferences. For example, a person associated with ride intent 212, may prefer to travel on the same route as the persons associated with ride intents 214 and 216, have the same music preference as the persons associated with ride intents 214 and 216, and be a non-smoker, similar to the persons associated with ride intents 214 and 216. Similarly, groups 220 and 230 may include ride intents defining individuals with a matching set of preferences.

In an embodiment, a constraint may be enforced such that a single ride intent may not belong to two different groups. For example, ride intent 212 only belongs to group 210, and is not part of groups 220 or 230. Such a constraint may avoid scenarios where, for example, a person is scheduled to ride in two different vehicles at the same exact time. In order to enforce such a constraint, in an embodiment, only one matcher 205 may operate on multiple intents at any given time. This ensures that a single intent is not matched into more than one group.

Although a single matcher 205 operating on multiple intents at any given time may ensure that a single intent is not matched into more than one group, this approach may be inefficient as the number of intents increase, since matcher 205 will have to examine each intent at a time and compare it to other intents. For example, if a matcher, implemented via a computer system, needs 10 seconds to check an intent for a match, the matcher can at most process 8640 intents per day. Therefore, a single matcher may not scale well for large applications. In addition, a single matcher may not be able to maximize the advantages offered by modern multi-core hardware which employs more than one processor or core. To address these issues, in an embodiment, multiple matchers may process multiple intents simultaneously.

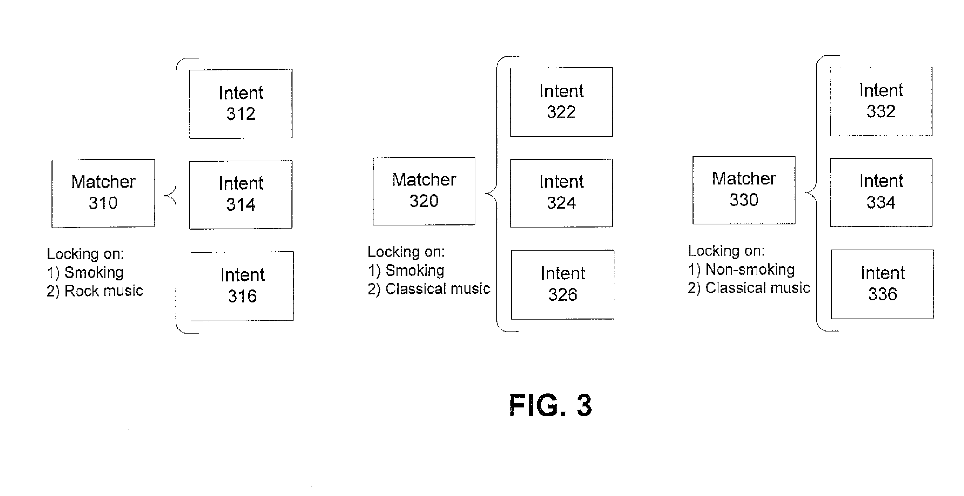

FIG. 3 illustrates an exemplary embodiment where multiple matchers operate on intents simultaneously. Matchers 310, 320, and 330 may operate on separate sets of intents so that a single intent is not matched into two different groups of intents. In an embodiment, the matchers 310, 320, and 330 may match intents (or ride intents), which define the preferences of people interested in car pooling. Intents 312, 314, 316, 322, 324, 326, 332, 334, and 336 may include preferences pertaining to a) the time at which the person associated with the ride intent needs to arrive at the destination, b) the earliest time at which the associated person is willing to depart from the destination, c) whether the associated person prefers to smoke in the car, d) the type of music the associated person likes to listen to, e) origin of the ride, f) destination of the ride, g) sex/gender of the other passengers in the car, h) driving style of the vehicle (ex: aggressive or conservative), i) conversation topics among passengers in the vehicle, j) occupation areas of the passengers in the vehicle, k) vehicle type or model, and I) temperature range inside the vehicle. For intents to match, all preferences of the intents may have to match.

In order to ensure that more than one matcher does not operate on the same intent simultaneously, matchers 310, 320, and 330 may lock intents based on the preferences of the intents. When a matcher locks an intent, other matchers may not operate on the locked intent at the same time. In an embodiment, the matchers may lock intents based on any number of preferences, i.e., on n-dimensions. In an embodiment, the matchers may lock intents based on two preferences, i.e., on two dimensions. The matchers may lock intents based on the value of smoking/non-smoking preference, and musical preference. One of the advantages of locking in this manner is that only the preferences relevant for locking have to be read prior to matchers obtaining the lock. Matcher 310 may lock all intents (312, 314, and 316) which have a smoking preference, and a musical preference of rock music. On the other hand, matcher 320 may lock all intents (322, 324, and 326) which have a smoking preference, and a musical preference of classical music. Since intents 312, 314, and 316 have at least one preference value (music preference in this example) different from intents 322, 324, and 326, none of the intents locked by matcher 310 have a possibility of being matched with the intents locked by matcher 320. Thus, matcher 310 may operate on intents 312, 314, and 316 in parallel with matcher 320, which may operate on intents 322, 324, and 326. Similarly, matcher 330 may operate on intents 332, 334, and 336 since matcher 330 has locked all intents with a non-smoking preference and classical music preference, which are different from the preference values locked by matchers 310 and 320. Although FIG. 3 illustrates an exemplary embodiment locking on two preferences (dimensions), the locking can be performed on any number of preferences.

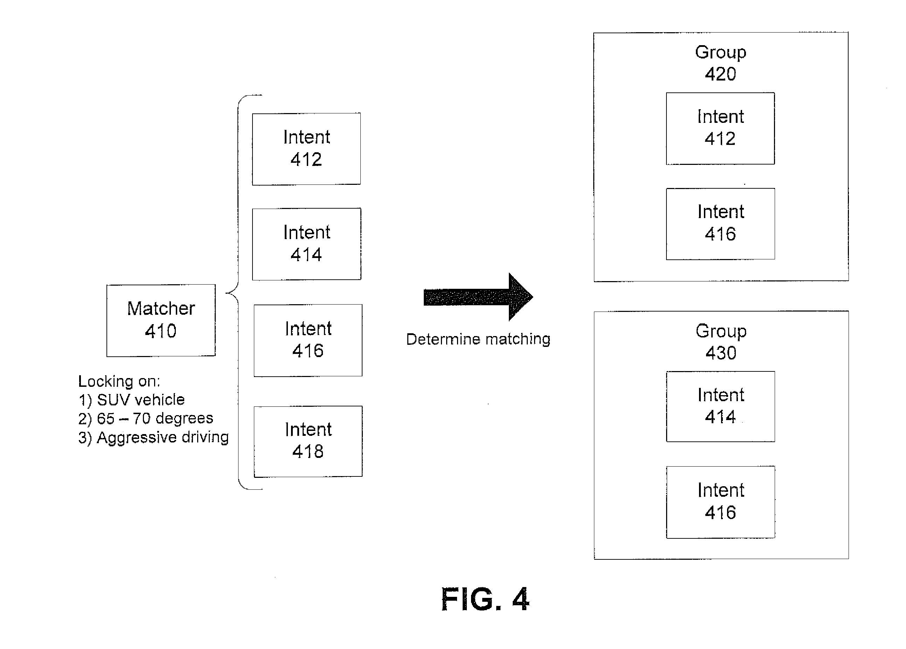

FIG. 4 illustrates locking on 3 preferences or dimensions in an embodiment. Matcher 410 may lock all intents, (412, 414, 416, and 418) which have a vehicle preference of SUV, temperature preference between 65 - 70 degrees Fahrenheit, and an aggressive driving style preference. Other matchers (not shown) may not operate on the intents locked by matcher 410. Matcher 410 may then examine the preferences of the intents it has locked and determine whether the preferences match. Matched intents may then be grouped together. Matcher 410 may determine that intent 412 and 416 match, and intents 414 and 418 match. Accordingly, intents 412 and 416 may be grouped into group 420, and intents 414 and 418 may be grouped into group 430.

In an embodiment, the above may be implemented via any computer programming language, or any combination of programming languages which can be executed by a computer processor. The programming language may include C++, Java, C#, and C. In an embodiment, the matchers, intents, and preferences may be represented as objects via an object-oriented programming language. In an embodiment, matchers and intents may be stored in a storage device, such as a database. Matchers, intents, and preferences may be stored as rows, or multiple rows in a database. In an embodiment, the locking of intents on N-dimensions may be implemented via memory locking. In an embodiment, the locking of intents on N-dimensions may be implemented via locking in a database, such as row-level locking. In an embodiment, the above may be implemented as part of an application which matches intents. The application may be a standalone application or a web application. The application may be a car-pooling application, such as SAP's TwoGo application.

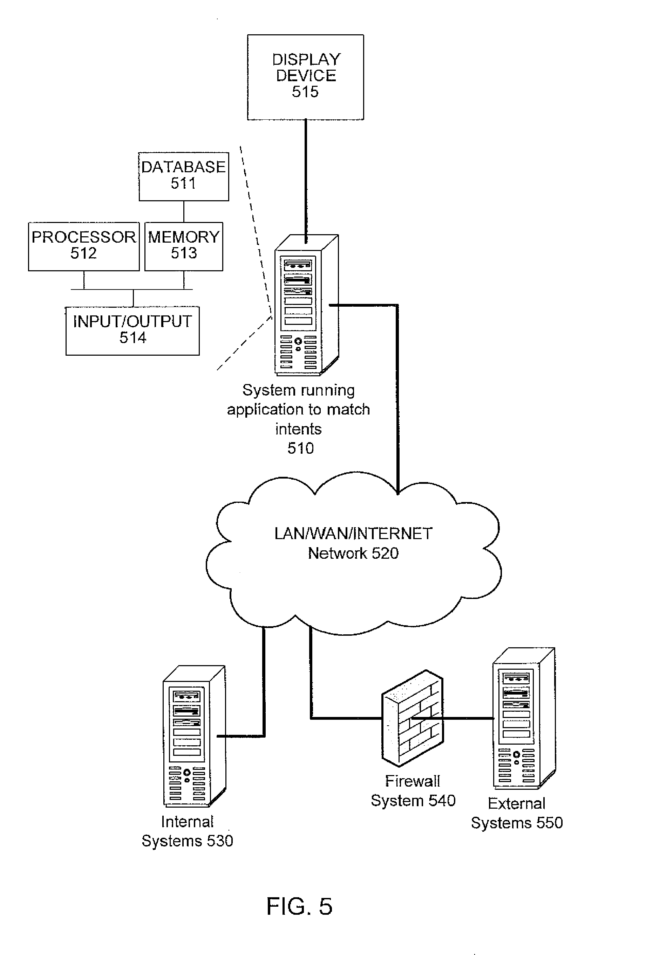

FIG. 5 shows an exemplary architecture in an embodiment of the invention. The system running an application to match intents 510 may be coupled to a display device 515, existing internal systems 530 through a network 520 and to external systems 550 through the network 520 and firewall system 540. The system running an application to match intents may include a desktop computer, laptop computer, tablet PC, client computer, mobile phone, central computer in a vehicle, and any other computer. The display device 515 may include a computer monitor, a tablet PC screen, a mobile phone screen, and any other displays. The existing internal systems 530 may include a server and may provide one or more of matcher data, intent data, preference data, and other data. The external systems 550 may include a server and may be maintained by a third party, such as a newspaper, information service provider, or exchange, and may contain matcher data, intent data, preference data, and other data, that may be updated by the third party on a periodic basis. The system running an application to match intents 510 may interact with these external systems to obtain updates through a firewall system 540 separating the internal systems from the external systems.

Each of the systems in FIG. 5 may contain a processing device 512, memory 513, a database 511, and an input/output interface 514, all of which may be interconnected via a system bus. In various embodiments, each of the systems 510, 530, 540, and 550 may have an architecture with modular hardware and/or software systems that include additional and/or different systems communicating through one or more networks. The modular design may enable a business to add, exchange, and upgrade systems, including using systems from different vendors in some embodiments. Because of the highly customized nature of these systems, different embodiments may have different types, quantities, and configurations of systems depending on the environment and organizational demands.

In an embodiment, memory 513 may contain different components for retrieving, presenting, changing, and saving data. Memory 513 may include a variety of memory devices, for example, Dynamic Random Access Memory (DRAM), Static RAM (SRAM), flash memory, cache memory, and other memory devices. Additionally, for example, memory 513 and processing device(s) 512 may be distributed across several different computers that collectively comprise a system.

Database 511 may include any type of data storage adapted to searching and retrieval. The database 511 may include SAP database (SAP DB), Informix, Oracle, DB2, Sybase, and other such database systems.

Processing device 512 may perform computation and control functions of a system and comprises a suitable central processing unit (CPU). Processing device 512 may comprise a single integrated circuit, such as a microprocessing device, or may comprise any suitable number of integrated circuit devices and/or circuit boards working in cooperation to accomplish the functions of a processing device. Processing device 512 may execute computer programs, such as object-oriented computer programs, within memory 513.

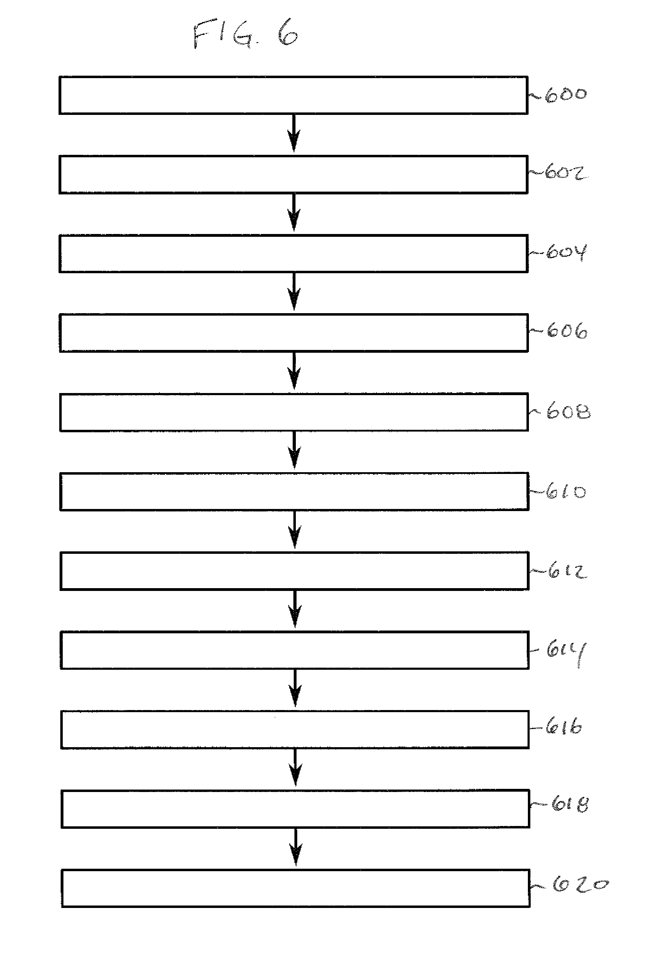

Fig. 6 shows a flowchart which illustrates a method according to an embodiment. First in step 600 a driver origin and a driver destination are received. Next in step 602 an acceptable driving delay parameter is received. Next in step 604 a determined route between the driver origin and the driver destination is determined using a driving route optimization program. The driving route optimization program may also include cartographic data. In step 606 a set of alternate routes between the driver origin and the driver destination are determined and they are in accordance with the allowable delay and the determined route. That is to say the alternate routes do not delay the driver more than the allowable delay which is either a time or a percentage of the time needed to travel the determined route. Next in step 608 a geographic bounding box is determined using the set of alternate routes. Next in step 610 a database query is constructed at least partially using the geographic bounding box. The database query is operable to be selective of the ride intents with both the rider origin and the rider destination within the geographic bounding box. Next in step 612 the rider database is queried using the database query. Next in step 614 a set of rider intent objects are received. Next in step 616 the set of rider intent objects is locked within the database. This prevents the set of rider intent objects from being selected a second time while the steps in this flowchart are being performed. Next in step 618 one or more selected rider intent objects are selected from the set of rider intent objects using a matching algorithm. Then finally in step 620 the set of rider intent objects in the database are released once the one or more selected rider intent objects have been selected.

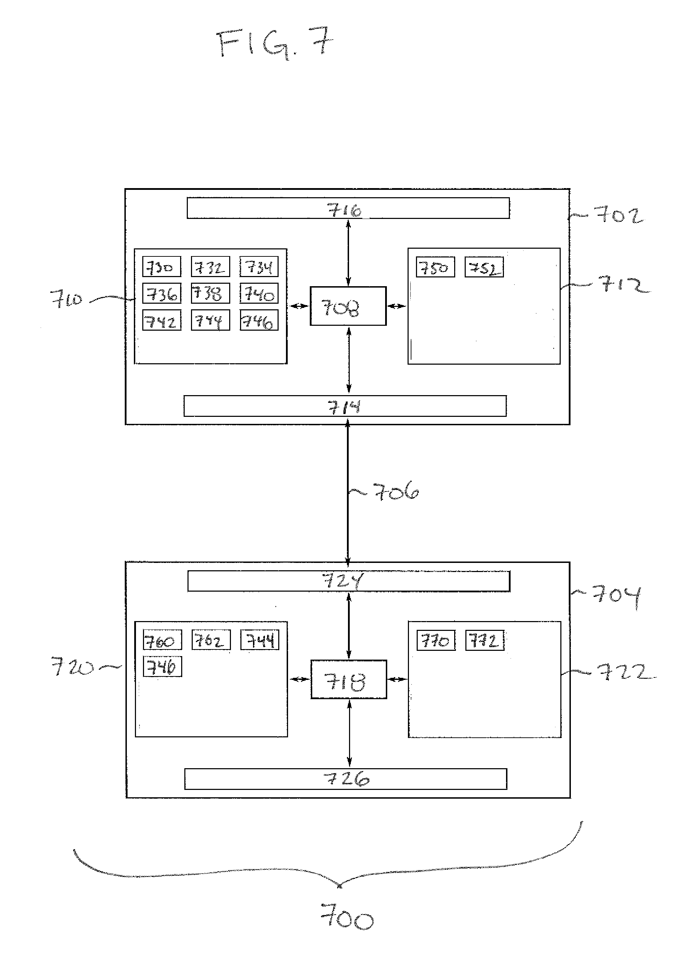

Fig. 7 illustrates an example of an electronic carpool matching system 700. The electronic carpool matching system comprises a mobile computing device 702 and a server 704. This example is one of many possible. The function of the mobile computing device 702 and the server may be combined in some embodiments. There is a network connection 706 which allows the mobile computing device 702 to communicate with the server 704. The mobile computing device 702 comprises a processor 708. The processor 708 is in communication with computer storage 710, computer memory 712, a network interface 714 that communicates via the network connection 706. The processor 708 is also in communication with a user interface 716 that a user may be able to enter data into and receive information from the mobile computing device 702.

The server 704 is shown as also containing a processor 718, a computer storage 720, computer memory 722, a network interface 724, and a user interface 726. The network interface 724 is connected to the network connection 706.

The computer storage 710 is shown as containing a driver origin 730 and a driver destination 732 that were potentially entered by the user interface 716. The computer storage 710 is also shown as containing an acceptable driving delay parameter 734. The computer storage 710 is shown as containing a determined route 736, and a set of alternate routes 738. These are routes between the driver origin 730 and the driver destination 732. The computer storage 710 is shown as containing data which is descriptive of a geographic bounding box 740 which is bound by the set of alternate routes 738. The computer storage 710 is further shown as containing an optional set of preferences 742 such as the age, gender, or other parameters descriptive of the driver and/or rider and/or their preferences. The computer storage 710 is further shown as containing a database query which is descriptive of the geographic bounding box 740 and in some cases the set of preferences 742. The computer storage 710 is further shown as containing a set of selected rider intent objects 746 that were selected using the database query 744.

The computer memory 712 is shown as containing a mapping module 750. The mapping module 750 may be an example of a driving route optimization program. The mapping module 750 may have been used to generate the determined route 736, and the set of alternate routes 738 using the driver origin 730 and the driver destination 732. The mapping module 750 may also be acceptable to create the geographic bounding box 740 using the set of alternate routes 738. The computer memory 712 is shown as containing a database query generation module 752 which is used to generate the database query 744 from the geographic bounding box 740 and in some embodiments the set of preferences 742. The processor 708 is able to transfer the database query 744 to the server 708 via the network interface 706. The computer memory 720 of the server 704 is shown as containing a copy of the database query 744 which was received via the network interface 706. The computer storage 720 is further shown as containing the selected rider intent objects 746. The computer storage is further shown as containing a database 760. The computer storage 720 is further shown as containing a set of rider intent objects 762 that were selected from the database using the database query 744. The computer memory 722 is shown as containing a database engine 770. The database engine is able to use the database 760 and is able to use the database query 744 to retrieve data and modify the database 760. Computer memory 722 is further shown as containing a matching algorithm 772 which is able to select the selected rider intent objects 746 from the set of rider intent objects 762. The database engine 770 is able to use the database query 744 to retrieve the set of rider intent objects 762 from the database 760. After the matching algorithm 772 has selected the selected rider intent objects 746 it transfers them to the mobile computing device 702 via the network interface or network connection 706.

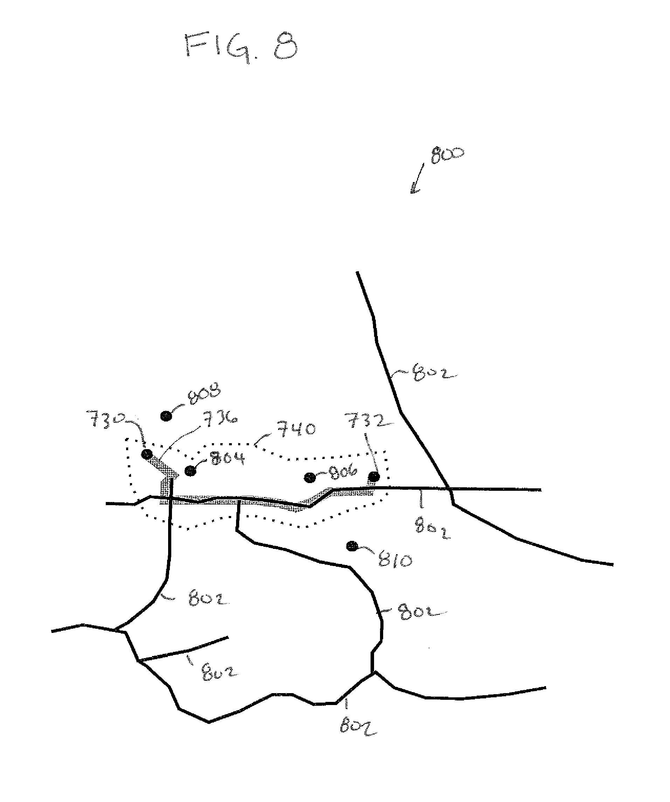

Fig. 8 shows an example of a map 800 showing major highways 802. On the map is marked the driver origin 730 and the driver destination 732. The line 736 indicates the determined route. The dashed line 740 represents a bounding box which was created by calculating a bounding box that describes alternate routes which do not exceed a minimum delay. The point 804 is an example of a rider origin within the geographic bounding box 740. The point 806 is an example of a rider destination within the geographic bounding box 740. The point 808 is an example of a rider origin outside of the bounding box 740. The point 810 is an example of a rider destination outside of the bounding box 740. If one rider is represented by the points 804 and 806, then the database query would select this rider. If the rider is represented by points 808 and 810 then the rider would not be selected by the database query constructed from the bounding box 740.

In some embodiments, the electronic car pool matching system may have one or more of the following features:
● Database with ride intents for drivers and passengers, each with:
   o Origin and destination of the intended ride expressed in latitude/longitude
   o Time window in which they plan to make the ride in start time/end time
   o Allowed detour time absolute in minutes or relative in percentage
   o Further preferences, e.g. smoker (own status on smoking), smoking preferences (requirement towards the smoking status of others), the same for gender and gender preferences, music taste and more.
● Multiple processors (locking makes only sense if there is someone to be locked out which is in this case another or many other processors), etc.
● Algorithm for each of the many ride matchers that work on one processor:
   o Go fetch an unmatched driver ride intent from the database
   o Compute the streets/area that can be reached from origin to destination within the given detour time and compute a bounding box (min/max latitude/longitude around the area)
   o Ask the lock manager whether it has any lock that:
      o ... intersects with the just computed bounding box and/or
      o ... intersects with the time window and/or
      o ... intersects with the smoking preferences and/or
      o ...intersects with the gender preferences and/or
      o ... other preferences
● If the driver ride intent intersects in all of these "dimensions" (spatial, temporal, preferences), mark the driver ride intent as locked and go on to check another
● If the driver ride intent doesn't intersect, lock this "space" by storing the bounding box, time window, smoking preferences, gender preferences in the memory of the lock manager and go on with matching

In some examples, the ride matcher component in a car pooling solution tries to match ride intents from drivers and passengers to arrange a common optimal ride together. When doing so, the ride matcher solves a classical optimization problem and probes the solution space (for example the well known "travelling salesman" problem). Whatever algorithm it uses (e.g. brute-force, Dijkstra, A* or whatever) it becomes faster to solve two optimizations with half of the possible stops than one with twice as many. Also modern CPU architectures with soon hundreds of cores require the parallel processing of ride intents to utilize the hardware. However, no ride intent may be processed twice and no ride intent may be associated with two different rides (double-booking problem). The task of this invention is to run as many matching runs as safely possible in parallel to speed the optimization up and parallelize the processing on modern CPU architectures.

In some examples, a ride matcher can narrow down the possible set of ride intents that can be matched together e.g. two ride intents can safely be treated as independent when the time window of one starts later then the time window of the first ends (if this car pooling solution supports time windows which is pretty common as people tend to ask for rides between known locations and for a certain time or time window). This example gives us the first dimension by which the space of ride intents can be divided, consequently allowing X ride matchers to work in parallel on X independent spaces along this dimension (time). Other dimensions are geographic location or preferences. It is safe to assume that one driver ride intent from location L1 to L2 and a given maximum detour time or bound time window can only reach a certain area. The smaller the detour time or time window the narrower the area the driver can reach. This reachable area can be either estimated from the maximum driving speed if fast streets would be available in direct line or, with more computational effort, real driving distance/duration as reported back from a map/routing system. In any case passenger ride intents outside this area are useless to include in the search for a ride. Hence they divide the possible solution space and can be run in parallel. Another dimension could be a music listening preference, a smoking or non-smoking preference, a gender preference (women not willing to take a ride with only men), etc. If the preference becomes a means to split the solution space in distinct areas, multiple ride matchers can be used and the complexity per area drops significantly. All N dimensions that are found and implemented can be used in combination further helping to split the ride intents into individually divided areas, e.g. even if along the time dimension two ride intents could match, they will maybe never along the location or preference dimension. Hence they can be processed by a separate ride matcher working only on its independent solution space.

In some transportation systems a ride intents describe who wants to drive when from where to where under which circumstances, e.g. Tom wants to drive from home to work tomorrow between 7 AM and 9 AM, but only if all other people joining the ride are smokers like him. Matching is the procedure in which a system eventually proposes a ride of two or more people based on their ride intents so that all conditions are met and none is violated, e.g. the system found a matching smoker that will pick up Tom at his home at 8:13 AM and drop him off at his work at 8:56 AM. The system is here the car pooling solution, basically an application/a service that makes it easy for people to arrange joint rides by automatically proposing who could share a ride with whom. Parallelization means to check for more than one matching ride intent at a time.

In some cases a ride intents can't be "handled" or matched in isolation. The nature of this problem is to find two or more ride intents that could be matched into one joint ride between the people who put the ride intents into the system. Also people putting ride intents into the system want at most to be matched once, i.e. the system may not arrange a ride with the same person for the same ride intent twice (at-most-once matching). To ensure this, the ride matcher component of the system (ride matcher for short) could be expressed as singleton, i.e. it could be implemented so that it exists only once. Each new ride intent is then compared against all existing ride intents. However, this quickly would become a bottle neck. Let's assume the ride matcher needs 10 seconds to check a ride intent for a match. Then the throughput of this single ride matcher would be 8640 ride intents per day (24 * 60 * 60/10). Although this may be acceptable for small applications, this approach wouldn't work as a world-wide service. It doesn't "scale" as you can't speed up the matching per ride intent (a lot of map/routing logic is required). More than that, it doesn't utilize modern multi-core hardware, i.e. it doesn't utilize the current state-of-the-art hardware that employs more than one processor/core (also in processor architecture Intel and others reached an end and can't scale up processors/cores anymore, so they scale out and put more of them onto the die/the metal, but this requires the software to equally scale out and run in parallel to utilize these many processors/cores). So the only way forward is to implement the system with more than one ride matcher. Having more ride matchers at work in parallel however brings up another problem which is isolation.

In some examples, ride matchers may not work in parallel on the same ride intents. If they do, it may happen that the same ride intent is matched into different rides which violates the natural limitation of people to split themselves and their cars into half and join different rides at the same time.

In this case one possible solution is relatively straight-forward. We are able to at least lock the ride intents currently in processing by the ride matchers. Locking means that one ride matcher blocks all other ride matchers from working on the same ride intents. We speak here of pessimistic concurrency control (active blocking) vs. optimistic concurrency control (where no ride matcher would block another until the very end at which is checked whether a ride may finally be arranged). We found pessimistic concurrency control to work better in our case as the computational effort is very high and the disadvantages of optimistic concurrency control (huge computation effort) outweigh the advantages of it (computation can be run in parallel and is only lost if at the end a conflict is detected).

In some cases when ride matchers work in parallel and locking is employed, it is likely that one blocks another (one ride matcher is waiting to check if a ride intent currently in use by another ride matcher could be matched with the ride intent currently under investigation). However, this yields the problem that, if not properly implemented, the ride matchers could dead-lock. Example: Ride matcher A works on ride intent 1 and ride matcher B works on ride intent 2. Both lock their ride intents and both see that there is another ride intent in the system. They try to get hold of it, but since Ride matcher A locked ride intent 1, ride matcher B can't get it and vice versa. This is a classical dead lock problem and both won't do anything anymore and wait for eternity. This may obviously not happen. Even if this is not happening, it is not acceptable if ride matchers wait for resources (ride intents). Amdahl's law states that speed-up or parallelization is "limited by the time needed for the sequential fraction of the program" (the locking in our case). Either the locking clogs its processor/core and we reach not the parallelization we intended to have (after all a waiting ride matcher is as useless as having none) or whenever we detect this situation we spin off another ride matcher for another free ride intent. This however is again not useful as it clogs our memory of which we also don't have indefinitely of. We therefore need to employ a locking scheme that shards/separates the ride matchers as best as possible so that they can run in parallel without blocking each other.

In some cases the solution may rely on multiple preferences. In some cases ride intents have many properties (or preferences), some spatial (from where to where), some in time (from when until when), some specific to car pooling solutions (gender preference, smoking preference, etc.). Instead of locking ride intents themselves, ride matchers lock the N-dimensional space in which these ride intents exist. No two ride matchers may work on ride intents in the same N-dimensional space (not to be confused with space as in latitude/longitude), e.g. if one ride matcher checks a ride intent that is due from 7 AM to 9 AM, it could lock out all ride matchers planning to work on ride intents with an overlapping time window (let's say from 8 AM to 10 AM). This means ride matchers can safely operate on a time window that is outside (let's say 9 AM onwards).

The same may hold true for spatial locking, e.g. one ride matcher works on a ride intent that covers Germany and therefore locks this space. While processing no other ride matcher may pick up any ride intent that touches Germany. Of course the locking isn't that coarse-grained, but much finer based on the actual ride intent. And these conditions are combined. Two ride matchers may work on ride intents that are in the time window 7 AM to 9 AM if they happen at spatial coordinates that don't intersect. Two ride matchers may work on ride intents that are in the time window 7 AM to 9 AM and the same spatial region if one set of them looks only at ride intents for smokers while the other looks only at ride intents for non-smokers. As long as they don't overlap in all dimensions, they can be treated independently which improves the systems room for parallelization. This is the core of the idea.

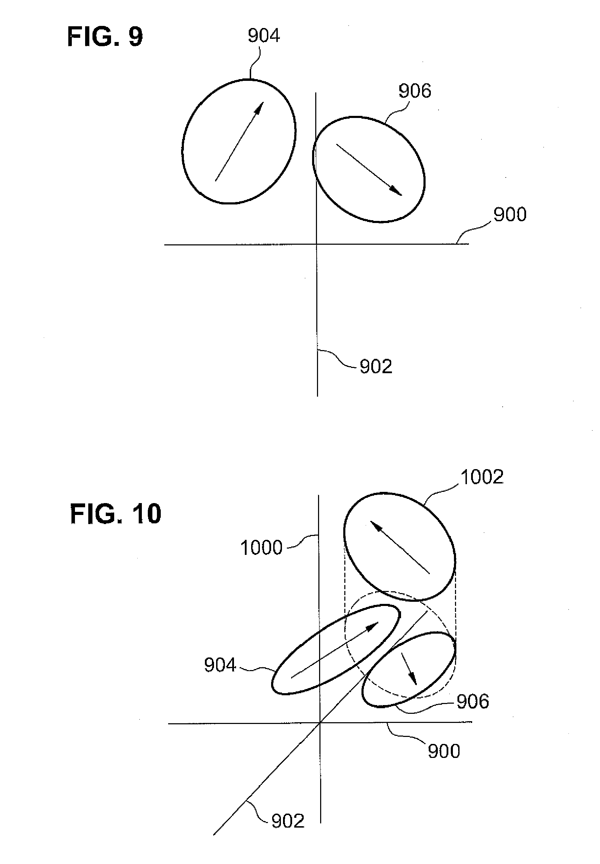

Fig. 9 shows a chart which illustrates longitude 900 and latitude 902 with a first ride intent 904 and a second ride intent 906. These two ride intents are spatial regions and do not overlap. The two ride intents that can be checked by two ride matchers independently as their spatial regions don't overlap.

Fig. 10 shows latitude 902 and longitude again with the addition of a time coordinate 1000. The first ride intent 904 and the second ride intent 906 are shown in the same plane again. There is a third ride intent 1002. All three of the ride intents 904, 906, 1002 do not intersect. The dashed lines connected to ride intent 1002 show that it is temporally displaced and therefore does not interfere with the other ride intents. Although the third ride intent 1002 intersects the spatial regions of the other two, but it is temporally disconnected. Examples for more dimensions were already named. They could be gender or smoking preferences, etc.

The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, some of the described embodiments may include software and hardware, but some systems and methods consistent with the present invention may be implemented in software or hardware alone. Additionally, although aspects of the present invention are described as being stored in memory, this may include other computer readable media, such as secondary storage devices, for example, solid state drives, or DVD ROM; the Internet or other propagation medium; or other forms of RAM or ROM.

### List of reference numerals

| | |
|---|---|
| 110 | matcher |
| 120 | intent |
| 121 | person |
| 122 | preference |
| 124 | preference |
| 126 | preference |
| 130 | intent |
| 131 | person |
| 132 | preference |
| 134 | preference |
| 136 | preference |
| 205 | matcher |
| 210 | group |
| 212 | intent |
| 214 | intent |
| 216 | intent |
| 220 | group |
| 222 | intent |
| 224 | intent |
| 226 | intent |
| 230 | group |
| 232 | intent |
| 234 | intent |
| 236 | intent |
| 310 | matcher |
| 312 | intent |
| 314 | intent |
| 316 | intent |
| 320 | matcher |
| 322 | intent |
| 324 | intent |
| 326 | intent |
| 330 | matcher |
| 332 | intent |
| 334 | intent |
| 336 | intent |
| 410 | matcher |
| 412 | intent |
| 414 | intent |
| 416 | intent |
| 418 | intent |
| 420 | group |
| 412 | intent |
| 416 | intent |
| 430 | group |
| 414 | intent |
| 416 | intent |
| 510 | system |
| 511 | database |
| 512 | processor |
| 513 | memory |
| 514 | input/output |
| 515 | display device |
| 520 | network |
| 530 | internal system |
| 540 | firewall |
| 550 | external system |
| 700 | electronic car pool matching system |
| 702 | mobile computing device |
| 704 | server |
| 706 | network connection |
| 708 | processor |
| 710 | computer storage |
| 712 | computer memory |
| 714 | network interface |
| 716 | user interface |
| 718 | processor |
| 720 | computer storage |
| 722 | computer memory |
| 724 | network interface |
| 726 | user interface |
| 730 | driver origin |
| 732 | driver destination |
| 734 | acceptable driving delay parameter |
| 736 | determined route |
| 738 | set of alternate routes |
| 740 | geographic bounding box |
| 742 | set of preferences |
| 744 | database query |
| 746 | selected rider intent objects |
| 750 | mapping module |
| 752 | data base query generation module |
| 760 | database |
| 762 | set of rider intent objects |
| 770 | database engine |
| 772 | matching algorithm |
| 800 | map |
| 802 | major highway |
| 804 | rider orgin |
| 806 | rider destination |
| 808 | rider origin |
| 810 | rider destination |
| 900 | latitude |
| 902 | longitude |
| 904 | first ride intent |
| 906 | second ride intent |
| 1000 | time |
| 1002 | third ride intent |

## Claims

1. An electronic car pool matching system (510, 700) comprising:
- a rider database means (511, 760, 770) containing ride intents (326, 332, 334, 336, 412, 414, 416, 418, 412, 416, 414, 416), wherein each of the ride intents comprises geographic coordinates of an rider origin (804, 808) and a rider destination (806, 810) for each ride intent;
- a memory means (712, 722) containing machine executable instructions;
- at least one processor means (708, 718) for executing the machine executable instructions, wherein execution of the instructions causes the processor to:
- receive (600) a driver origin (730) and a driver destination (732), wherein the driver origin and the driver destination are geographic coordinates of a driving itinerary;
- receive (602) an acceptable driving delay parameter (734), wherein the acceptable driving delay parameter is descriptive of an allowable delay in the driving itinerary;
- determine (604) a determined route (736) between the driver origin and the driver destination using a driving route optimization program (750);
- determine (606) a set of alternate routes (738) between the driver origin and the driver destination in accordance with the allowable delay and the determined route;
- determine (608) a geographic bounding box (740) using the set of alternate routes;
- construct (610) a data base query (744) at least partially using the geographic bounding box, wherein the database query is operable to be selective of ride intents with both the rider origin and the rider destination within the geographic bounding box;
- query (612) the rider data base with the data base query;
- receive (614) a set of rider intent objects (762), wherein the set of rider intent objects comprises the set of ride intents with both the rider origin and the rider destination within the geographic bounding box;
- lock (616) the set of rider intent objects in the database;
- select (618) one or more selected rider intent objects (746) from the set of rider intent objects using a matching algorithm; and
- release (620) the set of rider intent objects in the database.

2. The electronic car pool matching system of claim 1, wherein the electronic car pool matching system further comprises:
- a mobile computing device (702), wherein the mobile computing device comprises a first processor means (708), wherein the first processor means performs at least a portion of the machine executable instructions; and
- a server (704), wherein the server comprises the rider database means, wherein the server comprises a second processor means, wherein the at least one processor (718) means comprises the first processor means and the second processor means, and wherein the server and the mobile computing device are operable for forming a network connection (706).

3. The electronic car pool matching system of claim 2, wherein execution of the instructions causes the first processor to perform at least the following:
- receive the driver origin and the driver destination;
- receive the acceptable driving delay parameter;
- determine the determined route between the driver origin and the driver destination using the driving route optimization program;
- determine the set of alternate routes between the driver origin and the driver destination in accordance with the allowable delay and the determined route;
- determine the geographic bounding box using the set of alternate routes; and
- construct the data base query using the geographic bounding box.

4. The electronic car pool matching system of claim 2 or 3, wherein the mobile computing device is any one of the following: a personal digital assistant, a mobile telephone device, a smart phone, a computer, a lap top, a vehicle comprising a navigation system, and a navigation system.

5. The electronic car pool matching system of any one of the preceding claims, wherein execution of the instructions further causes the processor means to:
- determine a list of incorrectly selected rider intent objects from the set of rider intent objects using a screening algorithm;
- remove the list of incorrectly selected rider intent objects from the set of rider intent objects before selecting the one or more selected rider intent objects from the set of rider intent objects using the matching algorithm; and
- release the list of incorrectly selected rider intent objects in the database before selecting the one or more selected rider intent objects from the set of rider intent objects using the matching algorithm.

6. The electronic car pool matching system of claim 5, wherein the matching algorithm is operable for selecting inaccessible rider origins and a rider destinations in the set of rider intent objects.

7. The electronic car pool matching system of any one of the preceding claims, wherein the car pool matching system is operable to receive a second data base query after locking the set of rider intent objects in the database.

8. The electronic car pool matching system of any one of the preceding claims, wherein each of the ride intents further comprise a set of preferences, and wherein the matching algorithm is operable to optimize the preferences during selecting one or more selected rider intent objects from the set of rider intent objects using the matching algorithm.

9. The electronic car pool matching system of claim 8, wherein execution of the instructions further causes the processor to construct the data base query at least partially using at least one of the set of preferences.

10. The electronic car pool matching system of claim 8 or 9, wherein the set of preferences comprises any one of the following: smoking preference, music preference, gender, time window of ride, driving style, conversation style, occupation, vehicle type, temperature inside, and combinations thereof.

11. The electronic car pool matching system of any one of the preceding claims, wherein the driving itinerary further comprises waypoints, and wherein the set of alternate routes pass within a predetermined distance of the waypoints.

12. A computer implemented method of car pool matching comprising the steps of:
- receiving (600) a driver origin (730) and a driver destination (732), wherein the driver origin and the driver destination are geographic coordinates of a driving itinerary;
- receiving (602) an acceptable driving delay parameter (734), wherein the acceptable driving delay parameter is descriptive of an allowable delay in the driving itinerary;
- determining (604) a determined route (736) between the driver origin and the driver destination using a driving route optimization program (750);
- determining (606) a set of alternate routes (738) between the driver origin and the driver destination in accordance with the allowable delay and the determined route;
- determining (608) a geographic bounding box (740) using the set of alternate routes;
- constructing (610) a data base query (744) at least partially using the geographic bounding box, wherein the database query is operable to be selective of ride intents with both the rider origin and the rider destination within the geographic bounding box;
- querying (612)a rider data base means with the data base query, wherein the rider database means contains ride intents (326, 332, 334, 336, 412, 414, 416, 418, 412, 416, 414, 416), wherein each of the ride intents comprises geographic coordinates of an rider origin (804, 808) and a rider destination (806, 810) for each ride intent;
- receiving (614) a set of rider intent objects (762), wherein the set of rider intent objects comprises the set of ride intents with both the rider origin and the rider destination within the geographic bounding box;
- locking (616) the set of rider intent objects in the database;
- selecting (618) one or more selected rider intent objects (746) from the set of rider intent objects using a matching algorithm; and
- releasing (620) the set of rider intent objects in the database.

13. A computer program product comprising machine executable instructions (750, 752, 770, 772) for execution by at least one processor means (708, 718) of an electronic car pool matching system (510, 700), wherein the electronic car pool matching system further comprises a rider database means (511, 760, 770) containing ride intents (326, 332, 334, 336, 412, 414, 416, 418, 412, 416, 414, 416), wherein each of the ride intents comprises geographic coordinates of an rider origin (804, 808) and a rider destination (806, 810) for each ride intent, wherein execution of the instructions causes the at least one processor means to:
- receive (600) a driver origin (730) and a driver destination (732), wherein the driver origin and the driver destination are geographic coordinates of a driving itinerary;
- receive (602) an acceptable driving delay parameter (734), wherein the acceptable driving delay parameter is descriptive of an allowable delay in the driving itinerary;
- determine (604) a determined route (736) between the driver origin and the driver destination using a driving route optimization program (750);
- determine (606) a set of alternate routes (738) between the driver origin and the driver destination in accordance with the allowable delay and the determined route;
- determine (608) a geographic bounding box (740) using the set of alternate routes;
- construct (610) a data base query (744) at least partially using the geographic bounding box, wherein the database query is operable to be selective of ride intents with both the rider origin and the rider destination within the geographic bounding box;
- query (612) the rider data base with the data base query;
- receive (614) a set of rider intent objects (762), wherein the set of rider intent objects comprises the set of ride intents with both the rider origin and the rider destination within the geographic bounding box;
- lock (616) the set of rider intent objects in the database;
- select (618) one or more selected rider intent objects (746) from the set of rider intent objects using a matching algorithm; and
- release (620) the set of rider intent objects in the database.

14. A transportation system comprising an electronic car pool matching system according to any one of claims 1 to 11.
